**Europäisches Patentamt**

**European Patent Office**

**Office européen des brevets**

(19)

(11) Veröffentlichungsnummer: **0 287 590 B1**

(12) **EUROPÄISCHE PATENTSCHRIFT**

(45) Veröffentlichungstag der Patentschrift:
22.05.91 Patentblatt 91/21

(51) Int. Cl.⁵: **F02M 31/20, F28D 7/02**

(21) Anmeldenummer: **87906413.7**

(22) Anmeldetag: **28.09.87**

(86) Internationale Anmeldenummer:
**PCT/EP87/00550**

(87) Internationale Veröffentlichungsnummer:
**WO 88/02442 07.04.88 Gazette 88/08**

(54) **WÄRMETAUSCHER ZUM KÜHLEN VON KRAFTSTOFF.**

(30) Priorität: **06.10.86 DE 3633951**

(43) Veröffentlichungstag der Anmeldung:
**26.10.88 Patentblatt 88/43**

(45) Bekanntmachung des Hinweises auf die
Patenterteilung:
**22.05.91 Patentblatt 91/21**

(84) Benannte Vertragsstaaten:
**BE FR GB IT NL SE**

(56) Entgegenhaltungen:
**WO-A-86/05578
DE-A- 1 551 527
DE-A- 3 117 661
DE-A- 3 518 312**

(56) Entgegenhaltungen:
**DE-U- 8 335 036
NL-A- 8 005 847
US-A- 1 504 732
US-A- 1 852 490
US-A- 3 513 908
US-A-43 714 027**

(73) Patentinhaber: **Aeroquip GmbH
Ruhrstrasse 11
W-7570 Baden-Baden (DE)**

(72) Erfinder: **FIEDLER, Christian
Im Rad 8
W-7562 Gernsbach (DE)**

(74) Vertreter: **Patentanwälte Dipl.-Ing. Rudolf
Bibrach Dipl.-Ing. Elmar Rehberg
Postfach 1453 Pütterweg 6
W-3400 Göttingen (DE)**

## Beschreibung

Die Erfindung bezieht sich auf einen Wärmetauscher zum Kühlen von Flüssigkeit, mit einem von zwei Stirnwänden begrenzten zylindrischen Gehäuse, in dem ein Rohr zum Durchleiten einer ersten Wärmetauschflüssigkeit angeordnet ist, welches von einer wendelförmig geführten und im wesentlichen innerhalb des Gehäuses angeordneten Leitung für eine zweite Wärmetauschflüssigkeit umgeben ist, mit Anschlußstutzen für die erste Wärmetauschflüssigkeit einerseits und die zweite Wärmetauschflüssigkeit andererseits, wobei der Eingangsstutzen für die erste Wärmetauschflüssigkeit an der Stirnwand angeordnet und mit dem Rohr verbunden ist, welches Durchbrechungen für den Übertritt der ersten Wärmetauschflüssigkeit in den Innenraum des Gehäuses aufweist.

Kraftstoffe für Kraftfahrzeuge besitzen im allgemeinen einen relativ niedrigen Siedepunkt und neigen daher bei höheren Betriebs- bzw. Umgebungstemperaturen zum Verdampfen der leicht flüchtigen Bestandteile des Kraftstoffs. Dabei verdampfen in der Regel die Additive zuerst, so daß einerseits eine Umweltbelastung durch unkontrolliert austretende Gase eintritt und andererseits durch den Wegfall der Additive aus dem Kraftstoff verschlechterte Motorlaufbedingungen eintreten. Um dies, wie auch eine Dampfblasenbildung, im Kraftstoffsystem zu vermeiden, sind Wärmetauscher zum Kühlen von Kraftstoff bekannt, die in Verbindung mit einer Klimaanlage in dem Kraftfahrzeug eingesetzt werden.

Ein Wärmetauscher der eingangs beschriebenen Art ist aus der DE-A-15 51 527 bekannt. Dabei ist das Rohr von dem Eingangsstutzen der ersten Wärmetauschflüssigkeit bis zur gegenüberliegenden Stirnwand durchgehend ausgebildet und wird von dieser verschlossen. Die Durchbrechungen befinden sich kurz vor dem verschlossenen Ende des Rohres in einem kurzen Bereich seiner axialen Länge und sind über den Umfang verteilt angeordnet. Als erste Wärmetauschflüssigkeit findet hier Öl Verwendung, das entweder gekühlt oder geheizt werden soll. Ein solcher Wärmetauscher hat den Nachteil, daß seine Kühlleistung bei gleichmäßigem Durchsatz der Wärmetauschflüssigkeiten nicht regelbar ist. Ein weiterer Nachteil ist, daß das zu kühlende Öl sich direkt unter der Gehäusewand des Wärmetauschers befindet, und so bei einem Unfall mit Beschädigung der Gehäusewand leicht austreten kann. Eine Vermischung der beiden Wärmetauschflüssigkeiten kann ferner nicht völlig ausgeschlossen werden, da die wendelförmig geführte Leitung für die zweite Wärmetauschflüssigkeit mehrere zu dichtende Übergänge innerhalb des Gehäuses aufweist.

Aus der US-A-4 371 027 ist ein regelbarer Wärmetauscher bekannt. Durch ein Drosselelement läßt sich ein Rohr verschließen, das es der ersten Wärmetauschflüssigkeit erlaubt, den Wärmetauscher zu durchströmen, ohne an den wendelförmig geführten Leitungen der zweiten Wärmetauschflüssigkeit vorbeizufließen. Die wendelförmig geführten Leitungen der zweiten Wärmetauschflüssigkeit sind hier durchgehend ausgebildet und werden aus dem Gehäuse herausgeführt. Eine Vermischung der beiden Wärmetauschflüssigkeiten wird somit hier vermieden. Als Nachteil erweist es sich, daß das verschließbare Rohr separat an dem Gehäuse befestigt werden muß. Die Regelung des Drosselelements erfolgt von außen, so daß eine aufwendig zu dichtende Drehdurchführung durch das Gehäuse notwendig ist.

Aus dem DE-U 83 35 036.5 ist ein Wärmetauscher bekannt, der in der Leitung einer Wärmetauschflüssigkeit einen Profilkörper zum Verwirbeln der Wärmetauschflüssigkeit besitzt. Dadurch wird der Wirkungsgrad des Wärmetauschers erhöht.

Der Erfindung liegt die Aufgabe zugrunde, einen Wärmetauscher der eingangs beschriebenen Art aufzuzeigen, der bei einfacher Herstellung mit geringer Anzahl von Dichtstellen eine gute sowie regelbare Kühlleistung aufweist und dabei für das Kühlen von Kraftstoff geeignet ist.

Erfindungsgemäß wird dies dadurch erreicht, daß als erste Wärmetauschflüssigkeit ein Kühlmedium und als zweite Wärmetauschflüssigkeit zu kühlender Kraftstoff Verwendung finden, daß das Rohr zum Durchleiten des Kühlmediums an seinem einen Ende offen an den Innenraum des Gehäuses anschließt, daß im Bereich des offenen Endes des Rohres zum Durchleiten eines Kühlmediums ein verstellbares Drosselelement angeordnet ist, daß die Durchbrechungen über die Länge des Rohres verteilt angeordnet sind, und daß die wendelförmig geführte Kraftstoffleitung als durchgehende Rohrleitung ausgebildet ist, deren Enden aus einer Stirnwand des Gehäuses herausgeführt sind und die Anschlußstutzen bilden. Die Kraftstoffleitung wird so auch durch das Gehäuse des Wärmetauschers geschützt. Dies ist wichtig, da für einen guten Wärmeaustausch die Wandungen der wendelförmig geführten Leitung der zweiten Wärmetauschflüssigkeit nicht zu dick sein dürfen. Das offene Ende des Rohres erlaubt es, das Kühlmedium durch den Wärmetauscher zu führen, so daß es dabei nur zu geringen Teilen in Wärmekontakt mit der wendelförmig geführten Leitung des Kraftstoffs kommt. Dies ist von Vorteil, wenn keine starke Kühlung des Kraftstoffs erwünscht ist. In Verbindung mit dem verstellbaren Drosselelement und den über die Länge des Rohres verteilten Durchbrechungen ist eine Steuerung der Leistung des Wärmetauschers möglich. Gibt das Drosselelement die Öffnung des Rohres frei, wird ein großer Teil des Kühlmediums durch den Wärmetauscher hindurchtreten, ohne mit der wendelförmig geführten Kraftstoffleitung in Wärmekontakt zu kommen. Nur die Teile des Kühlmediums, die durch die Durchbrechungen von dem Innenraum des Rohrs in den Innenraum des Gehäuses gelangt sind, tragen zur Kühlung des Kraftstoffs bei. Der Umfang dieser Anteile läßt sich durch den Verschluß des offenen Endes des Rohrs mittels des Drosselelements erreichen. Je kleiner die am Ende des Rohrs verbleibende Austrittsöffnung für das Kühlmedium ist, desto größer sind die Anteile des Kühlmediums, die durch die Durchbrechungen in den Innenraum des Gehäuses gelangen, desto größer ist also die Kühlleistung des Wärmetauschers. Die über die ganze Länge des Rohrs verteilt angeordneten Durchbrechungen gewährleisten zum einen einen Mindestwirkungsgrad des Wärmetauschers und zum anderen einen hinreichend geringen Durchtrittswiderstand für das Kühlmedium durch den Wärmetauscher. Außerdem kann eine gleichmäßige oder eine gezielt ungleichmäßige Verteilung gewählt werden, um auf diese Art und Weise auf das Temperaturprofil des Innenraums des Gehäuses und damit letztlich auf das Temperaturprofil des Kraftstoffs in der Rohrleitung Einfluß zu nehmen. Die als durchgehende Rohrleitung ausgebildete, wendelförmig geführte Kraftstoffleitung wirft keinerlei Dichtungsprobleme auf, so daß eine Trennung des Kraftstoffs vom Kühlmedium sicher gewährleistet ist. Dichtungsprobleme werden auch dadurch vermieden, daß die Enden der durchgehenden Rohrleitung aus einer Stirnwand des Gehäuses herausgeführt sind und die Anschlußstutzen bilden. Die typischerweise etwas größere Materialstärke der Stirnwand erlaubt es problemlos, die Dichtung durch eine Schweiß- oder Lötnaht auszuführen. Der neue Wärmetauscher wirkt infolge seiner Ausbildung geräuschdämpfend, so daß zusätzliche Geräuschdämpfer im Kühlkreislauf nicht erforderlich sind.

Das Rohr zum Durchleiten des Kühlmediums kann in dem Eingangsstutzen des Kühlmediums gelagert sein, um die Verbindung mit diesem herzustellen. Diese Form der Verbindung stellt ihre einfache Realisierung dar. Hierbei ist zu beachten, daß es nicht auf eine flüssigkeitsdichte Verbindung ankommt, sondern ein fester Sitz des Rohres in dem Gehäuse gewährleistet sein muß. Als Ausführungsform der festen Lagerung bietet sich beispielsweise eine Preßpressung an.

Für die Steuerung des Drosselelements kann ein Dehnstoffelement vorgesehen sein, welches mit Kontakt zu der Rohrleitung für den Kraftstoff angeordnet ist. Das Dehnstoffelement steuert die Verstellung des Drosselelements, und zwar in Abhängigkeit von der Kraftstofftemperatur. Übersteigt die tatsächliche Kraftstofftemperatur die gewünschte Kraftstofftemperatur, so daß also mehr Kühlleistung erforderlich ist, dann wird das Dehnstoffelement infolge Ausdehnung das Drosselelement im Sinne eines Verschließens des offenen Rohrendes betätigen, so daß relativ mehr Kühlmedium durch die Durchbrechungen in den Innenraum des Gehäuses austritt. Unterschreitet dagegen die tatsächliche Kraftstofftemperatur die gewünschte Kraftstofftemperatur, dann wird sich das Dehnstoffelement zusammenziehen und das Drosselelement im Sinn eines Öffnens des freien Endes des Rohrs zum Durchleiten des Kühlmediums verstellen, so daß mehr Kühlmedium aus dem freien Rohrende in den Innenraum übertritt, und zwar an einer Stelle, an der es kaum noch eine Kühlwirkung auf die Kraftstoffleitung ausüben kann.

Alle Anschlußstutzen für das Kühlmedium einerseits und den Kraftstoff andererseits können an den Stirnwänden angeordnet sein. An den Stirnwänden sind die zur Dichtung notwendigen Löt- oder Schweißarbeiten deutlich leichter und sicherer durchzuführen, da das Material der Stirnwände typischerweise dicker als das der zylindrischen Gehäusewandung ist. Zumindest ist es so möglich, die zylindrische Gehäusewandung durch Profilgebung zu stabilisieren und so zu einer Gewichtsersparnis zu kommen. Als günstig erweist sich, den Eingangs- und Ausgangsstutzen für den Kraftstoff sowie den Eingangsstutzen für das Kühlmedium auf der einen Stirnwand und den Ausgangsstutzen für das Kühlmedium auf der anderen, gegenüberliegenden Stirnwand anzuordnen. Das Kühlmedium durchströmt so das Gehäuse vom einen Ende her zum anderen in einer Richtung und es besteht die Möglichkeit, den Kraftstoff im wesentlichen im Gegenstrom zur Richtung des Kühlmediums zu führen.

Das Gehäuse kann einstückig ausgebildet sein, wobei die Stirnwände aus den Endbereichen eines Rohrabschnitts durch Kaltumformung gebildet sind. Die Herstellung gestaltet sich in der Weise, daß ausgehend von einem Rohrabschnitt zunächst ein Ende durch Kaltumformung auf den Durchmesser des gewünschten Anschlußrohrs reduziert wird, wobei gleichzeitig die eine Stirnwand entsteht. Diese Stirnwand wird dann mit zwei Bohrungen für die Durchführung der Kraftstoffleitung versehen. Nach dem Einbringen der Kraftstoffleitung erfolgt der Löt- bzw. Schweißvorgang im Bereich der einen Stirnwand und im Bereich des anderen Endes des Rohrabschnitts wird durch Kaltumformen die andere Stirnwand und der Ausgangsstutzen für das Kühlmedium angeformt. Es ist aber auch vorteilhaft möglich, daß das Gehäuse aus zwei miteinander verbundenen fließgepreßten Hälften besteht, die also jeweils etwa halbe axiale Länge des Gehäuses aufweisen und somit nach dem Einbringen der gewendelten Rohrleitung miteinander verbunden werden müssen, was zweckmäßig durch einen Schweiß- oder Lötvorgang erfolgt, so daß bei dieser Ausführungsform.drei Lötstellen bzw. Schweißstellen entstehen. Vorteilhaft können aber die beiden Hälften des Gehäuses auch gleich ausgebildet sein, mit Ausnahme der Bohrungen für die Durchführung der Kraftstoffleitung an dem einen Teil.

In der Rohrleitung für den Kraftstoff können Profilkörper angeordnet sein, die eine den durchfließenden Kraftstoff verwirbelnde Gestaltung aufweisen. Beispielsweise eigenen sich verwundene Sternkörper oder

3

abgewinkelte flächige Stücke hierfür in besonderer Weise. Diese können einfach in die Rohrleitung für den Kraftstoff eingebracht werden und werden durch die Herstellung der Wendelform dann in ihrer Lage fixiert.

Eine Ausführungsform des Tauschers ist in den Zeichnungen dargestellt und wird im Folgenden erläutert. Es zeigen :

Figur 1 den Wärmetauscher teilweise geschnitten,

Figur 2 eine Stirnwandansicht des Wärmetauschers und

Figur 3 einen Schnitt gemäß der Linie III-III in Figur 1.

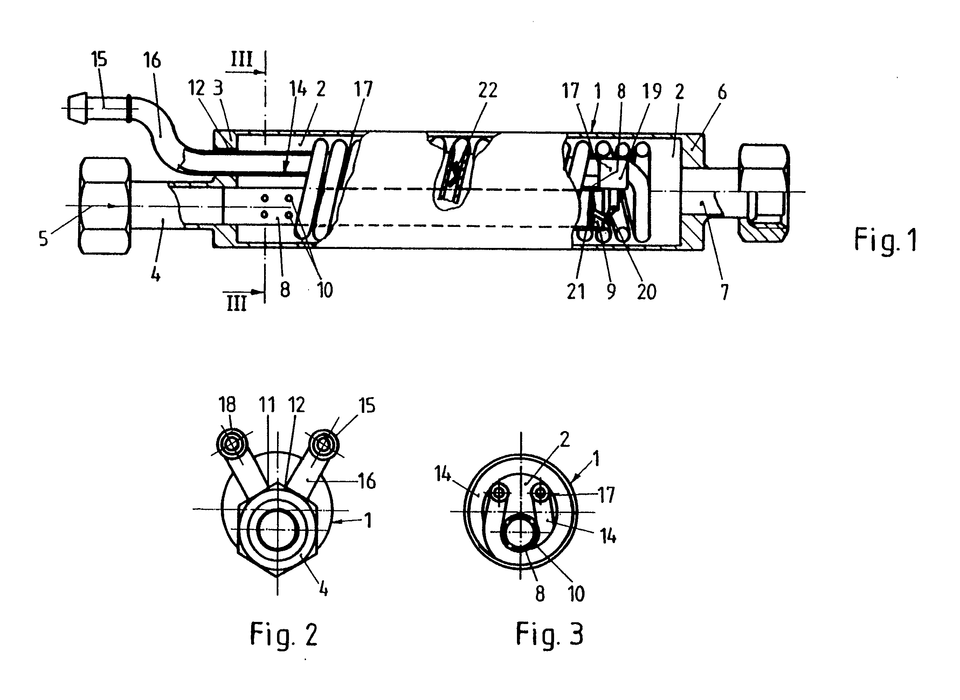

Der in Figur 1 dargestellte Wärmetauscher weist ein zylindrisches Gehäuse (1) auf, welches einen Innenraum (2) umschließt. Am einen Ende des Gehäuses (1) ist eine Stirnwand (3) vorgesehen, die sich in einem Anschlußstutzen (4) für das Kühlmedium fortsetzt bzw. mit einem solchen Anschlußstutzen (4) versehen ist. Durch diesen Anschlußstutzen (4) wird das Kühlmedium gemäß Pfeil (5) eingeleitet. Am anderen Ende des Gehäuses (1) ist eine weitere Stirnwand (6) gebildet, die sich in einem Anschlußstutzen (7) (Ausgangsanschlußstutzen für das Kühlmedium) fortsetzt. In der Stirnwand (3) mit Anschluß an den freien Querschnitt des Anschlußstutzens (4) ist ein Rohr (8) zum Durchleiten des Kühlmediums angeordnet, welches sich über die wesentliche axiale Länge des Gehäuses (1) erstreckt und an seinem anderen Ende (9) offen in den Innenraum (2) des Gehäuses (1) übergeht. Über die axiale Länge und über den Umfang (Figur 3) verteilt sind Durchbrechungen (10) in der Wandung des Rohres (8) vorgesehen, durch die das Kühlmedium aus dem Innern des Rohres (8) in den Innenraum (2) des Gehäuses übertritt. Ein Teil des Kühlmediums kann, insbesondere bei offenem Ende (9) des Rohres (8), auch dort in den Innenraum (2) des Gehäuses (1) übertreten.

In der Stirnwand (3) des Gehäuses (1) sind zwei Bohrungen (11, 12) vorgesehen, durch die die Kraftstoffleitung hindurchgeführt und mittels je einer Lötstelle (13) abdichtend fixiert ist. Die Kraftstoffleitung besteht aus einer durchgehenden Rohrleitung (14), die aus einem Stück hergestellt ist. Die Rohrleitung (14) besitzt die aus der Zeichnung ersichtliche wendelförmige Gestalt, beginnend an einem Anschlußstutzen (15) (Eingangsanschlußstutzen), und durchdringt nach einer Abkröpfung (16) die Stirnwand (3). Sie setzt sich in einem geraden Stück (17) fort, welches sich über die wesentliche axiale Länge des Gehäuses (1) bzw. des Innenraums (2) erstreckt, und geht dann in die gewendelte Form über. Auf diese Weise wird der Kraftstoff im Gegenstrom zu dem Kühlmedium geführt. Die Rohrleitung (14) durchdringt dann die andere Bohrung (11) und endet in einem Anschlußstutzen (18) (Ausgangsanschlußstutzen).

Etwa an der Übergangsstelle zwischen dem geraden Stück (17) und den Wendeln der Rohrleitung (14) ist ein Dehnstoffelement (19) angeordnet, welches über Anlenkhebel (20) mit einem Drosselelement (21) in Verbindung steht, welches z.B. als Drosselklappe im Bereich des freien Endes (9) des Rohres (8) schwenkbar gelagert ist. Je nach der Ausdehnung des Dehnstoffelements (19) infolge der Temperatur des Kraftstoffs wird das Drosselelement (21) verstellt, so daß damit eine Leistungsregulierung des Wärmetauschers geschaffen ist. Ist die Temperatur des in der Rohrleitung (14) einströmenden Kraftstoffs zu hoch, dann wird sich das Dehnstoffelement (19) ausdehnen und das Drosselelement (21) im Sinne einer Schließbewegung des freien Endes (9) des Rohres (8) mehr schließen, so daß vergleichsweise mehr Kühlmedium durch die Durchbrechungen (10) in den Innenraum (2) des Gehäuses (1) überströmt. Der Kraftstoff wird somit stärker gekühlt. Ist dagegen die Kraftstofftemperatur zu niedrig, wird sich das Dehnstoffelement (19) zusammenziehen und das Drosselelement (21) im Sinne eines Öffnens des freien Endes (9) des Rohres (8) verstellen, so daß vergleichsweise mehr Kühlmedium am Ende (9) des Rohres (8) in den Innenraum (2) ausströmt, so daß es den wesentlichen Teil des Innenraums (2) entlang der Kraftstoffleitung nicht durchströmen kann, sondern gleichsam nach Kurzschlußart direkt in den Anschlußstutzen (7) übertritt. Die Kühlwirkung wird damit vermindert und die Kraftstofftemperatur wird ansteigen. Damit ist also eine Leistungsregelung geschaffen.

Um die Verwirbelung des Kraftstoffs in der Rohrleitung (14) zu begünstigen, können in der Kraftstoffleitung (14) Profilkörper (22) in Sternform oder in abgewinkelter Form untergebracht sein. Diese Profilkörper (22) werden in die Rohrleitung (14) eingebracht, bevor die Wendelform gewickelt wird. Durch den Verformungsvorgang der Rohrleitung (14) werden diese Profilkörper (22) an Ort und Stelle fixiert. Sie dienen durch ihre Verwirbelungswirkung auf den Kraftstoff einer besseren Wärmeübertragung.

## Bezugszeichenliste:

1 = Gehäuse

2 = Innenraum

3 = Stirnwand

4 = Anschlußstutzen

5 = Pfeil

6 = Stirnwand

7 = Anschlußstutzen

8 = Rohr

9 = Ende

10 = Durchbrechung

11 = Bohrung

12 = Bohrung

13 = Lötstelle

14 = Rohrleitung

15 = Anschlußstutzen

16 = Abkröpfung

17 = gerades Stück

18 = Anschlußstutzen

19 = Dehnstoffelement

20 = Anlenkhebel

21 = Drosselelement

22 = Profilkörper

## Ansprüche

1. Wärmetauscher zum Kühlen von Flüssigkeit, mit einem von zwei Stirnwänden (3, 6) begrenzten zylindrischen Gehäuse (1), in dem ein Rohr (8) zum Durchleiten einer ersten Wärmetauschflüssigkeit angeordnet ist, welches von einer wendelförmig geführten und im wesentlichen innerhalb des Gehäuses angeordneten Leitung für eine zweite Wärmetauschflüssigkeit umgeben ist, mit Anschlußstutzen (4, 7, 15, 18) für die erste Wärmetauschflüssigkeit einerseits und die zweite Wärmetauschflüssigkeit andererseits, wobei der Eingangsstutzen (4) für die erste Wärmetauschflüssigkeit an der Stirnwand (3) angeordnet und mit dem Rohr (8) verbunden ist, welches Durchbrechungen (10) für den Übertritt der ersten Wärmetauschflüssigkeit in den Innenraum (2) des Gehäuses (1) aufweist, dadurch gekennzeichnet, daß als erste Wärmetauschflüssigkeit ein Kühlmedium und als zweite Wärmetauschflüssigkeit zu kühlender Kraftstoff Verwendung finden, daß das Rohr (8) zum Durchleiten des Kühlmediums an seinem einen Ende (9) offen an den Innenraum (2) des Gehäuses anschließt, daß im Bereich des offenen Endes (9) des Rohres (8) zum Durchleiten des Kühlmediums ein verstellbares Drosselelement (21) angeordnet ist, daß die Durchbrechungen (10) über die Länge des Rohres (8) verteilt angeordnet sind, und daß die wendelförmig geführte Kraftstoffleitung als durchgehende Rohrleitung (14) ausgebildet ist, deren Enden aus der Stirnwand (3) des Gehäuses herausgeführt sind und die Anschlußstutzen (15, 18) bilden.

2. Wärmetauscher nach Anspruch 1, dadurch gekennzeichnet, daß das Rohr (8) in dem Eingangsstutzen (4) gelagert ist, und daß zur Lagerung vorzugsweise eine Preßpassung vorgesehen ist.

3. Wärmetauscher nach Anspruch 1, dadurch gekennzeichnet, daß für die Steuerung des Drosselelements (21) ein Dehnstoffelement (19) vorgesehen ist, welches mit Kontakt zu der Rohrleitung (14) für den Kraftstoff angeordnet ist.

4. Wärmetauscher nach Anspruch 1, dadurch gekennzeichnet, daß alle Anschlußstutzen (4, 7, 15, 18) für das Kühlmedium einerseits und den Kraftstoff andererseits an den Stirnwänden (3, 6) angeordnet sind, wobei vorzugsweise der Eingangs- und Ausgangsstutzen (15, 18) für den Kraftstoff und der Eingangsstutzen (4) für das Kühlmedium auf der einen Stirnwand (3) und der Ausgangsstutzen (7) für das Kühlmedium auf der anderen, gegenüberliegenden Stirnwand (6) angeordnet sind.

5. Wärmetauscher nach Anspruch 1, dadurch gekennzeichnet, daß das Gehäuse (1) einstückig ausgebildet ist und die Stirnwände (3, 6) aus den Endbereichen eines Rohrabschnitts durch Kaltumformung gebildet sind.

6. Wärmetauscher nach Anspruch 1, dadurch gekennzeichnet, daß das Gehäuse (1) aus zwei miteinander verbundenen fließgepreßten Hälften besteht.

7. Wärmetauscher nach Anspruch 1 bis 5, dadurch gekennzeichnet, daß in der Rohrleitung (14) für den Kraftstoff Profilkörper (22) angeordnet sind, die eine den durchfließenden Kraftstoff verwirbelnde Gestaltung aufweisen.

## Claims

1. Heat exchanger for the cooling of a fluid, having a cylindrical housing (1) limited by two end walls (3, 6), in which housing a tube (8) is arranged for the passage of a first heat-exchange fluid, this tube being surrounded by a helically guided line, arranged essentially within the housing, for a second heat-exchange fluid, and having connectors (4, 7, 15, 18) for the first heat-exchange fluid on the one hand and the second heat-exchange fluid on the other hand, the inlet connector (4) for the first heat-exchange fluid being arranged on the end wall (3) and connected to the tube (8) which possesses perforations (10) for the release of the first heat-exchange fluid into the inner space (2) of the housing (1), characterised in that a coolant is used as the first heat-exchange fluid and fuel which is to be cooled is used as the second heat-exchange fluid, in that the tube (8) for passing the coolant openly connects to the inner space (2) of the housing at one of its ends (9), in that an adjustable restrictor element (21) is arranged in the region of the open end (9) of the tube (8) for the passage of the coolant, in that the perforations (10) are distributed over the length of the tube (8), and in that the helically guided fuel line is designed as a through pipe (14) whose ends are guided out from the end wall (3) of the housing and form the connectors (15, 18).

2. Heat exchanger according to Claim 1, characterised in that the tube (8) is mounted in the inlet connector (4), and in that a pressure fit is preferably provided for this mounting.

3. Heat exchanger according to Claim 1, characterised in that an element of expandable material (19) is provided to control the restrictor element (21) and is arranged in contact with the pipe (14) for the fuel.

4. Heat exchanger according to Claim 1, characterised in that all connectors (4, 7, 15, 18) for the coolant on the one hand and for the fuel on the other hand are arranged at the end walls (3, 6), the inlet and outlet connectors (15, 18) for the fuel and the inlet connector (4) for the coolant preferably being arranged on one end wall (3), and the outlet connector (7) for the coolant being arranged on the other, opposite end wall (6).

5. Heat exchanger according to Claim 1, characterised in that the housing (1) is of integral design and the end walls (3, 6) are formed by cold forming from the end regions of a tube section.

6. Heat exchanger according to Claim 1, characterised in that the housing (1) consists of two mutually connected extruded halves.

7. Heat exchanger according to Claims 1 to 5, characterised in that profiled members (22) are arranged in the pipe (14) for the fuel and have a design which swirls the fuel as it passes through.

## Revendications

1. Echangeur de chaleur pour le refroidissement de liquide, avec un boîtier cylindrique (1) délimité par deux parois d'extrémité (3, 6), dans lequel est disposé un tube (8) pour la circulation d'un premier liquide d'échange de chaleur, lequel tube est entouré d'une conduite enroulée en forme d'hélice et disposée, pour l'essentiel, à l'intérieur du boîtier pour un deuxième liquide d'échange de chaleur, avec des raccords (4, 7, 15, 18) pour le premier liquide d'échange de chaleur, d'une part, et pour le deuxième liquide d'échange de chaleur, d'autre part, le raccord d'entrée (4) pour le premier liquide d'échange de chaleur étant disposé sur la paroi frontale (3) et étant relié au tube (8), lequel présente des perforations (10) pour le passage du premier liquide d'échange de chaleur dans l'espace intérieur (2) du boîtier (1), **caractérisé** en ce qu'un agent de refroidissement est utilisé comme le premier liquide d'échange de chaleur et un carburant à refroidir est utilisé comme le deuxième liquide d'échange de chaleur ; que le tube (8) pour la circulation de l'agent de refroidissement débouche dans l'espace intérieur (2) du boîtier en étant ouvert à son extrémité (9), que dans la région de l'extrémité ouverte (9) du tube (8) pour la circulation de l'agent de refroidissement est disposé un élément à étranglement réglable (21) ; que les perforations (10) sont réparties sur la longueur du tube (8), et que la conduite de carburant, enroulée en forme d'hélice, est sous la forme d'une conduite tubulaire continue (14) dont les extrémités débouchent à travers l'une des parois d'extrémité (3) du boîtier et constituent les raccords (15, 18).

2. Echangeur de chaleur selon la revendication 1, caractérisé en ce que le tube (8) est ajusté dans le raccord d'entrée (4) et que pour son ajustement il est prévu de préférence un emmanchement à la presse.

3. Echangeur de chaleur selon la revendication 1, caractérisé en ce qu'il est prévu pour commander l'élément à étranglement (21) un élément en matériau dilatable (19) qui est disposé au contact de la conduite tubulaire (14) pour le carburant.

4. Echangeur de chaleur selon la revendication 1, caractérisé en ce que tous les raccords (4, 7, 15, 18) pour l'agent de refroidissement, d'une part, et pour le carburant d'autre part, sont disposés sur les parois frontales (3, 6), les raccords d'entrée et de sortie (15, 18) pour le carburant et le raccord d'entrée (4) pour l'agent de refroidissement étant de préférence disposés sur la même paroi d'extrémité (3) et le raccord de sortie (7) pour l'agent de refroidissement étant disposé sur l'autre paroi d'extrémité opposée (6).

5. Echangeur de chaleur selon la revendication 1, caractérisé en ce que le boîtier (1) est d'une seule pièce et que les parois d'extrémité (3, 6), sont formées par déformation à froid à partir des régions terminales d'un tronçon de tube.

6. Echangeur de chaleur selon la revendication 1, caractérisé en ce que le boîtier (1) est constitué de deux moitiés assemblées l'une à l'autre par emmanchement à la presse.

7. Echangeur de chaleur selon les revendications 1 à 5, caractérisé en ce que des corps profilés (22) pour le carburant sont disposés dans la conduite tubulaire (14), ces corps présentant une conformation qui fait tourbillonner le carburant en circulation.

Fig. 1

Fig. 2

Fig. 3